# EUROPEAN PATENT SPECIFICATION

(11) **EP 2 061 857 B1**
(45) Date of publication and mention of the grant of the patent: **28.09.2011**
(21) Application number: 07808620.4
(22) Date of filing: 29.08.2007
(51) Int. Cl.: C09K 8/467, C04B 14/06, C04B 28/02, C04B 111/74

(54) **METHOD OF CEMENTING GAS OR OIL PIPELINE AND HYDRAULIC CEMENT SLURRY**
VERFAHREN ZUR ZEMENTIERUNG EINER GAS- ODER ÖLPIPELINE UND HYDRAULISCHE ZEMENTMASSE
PROCÉDÉ DE CIMENTATION DE PIPELINE DE GAZ DE PÉTROLE ET LAITIER DE CIMENT HYDRAULIQUE

(30) Priority: 15.09.2006 NO 20064174
(43) Date of publication of application: 27.05.2009
(73) Proprietor: Elkem AS, 0377 Oslo (NO)
(72) Inventor: REVIL, Philippe, 74540 Viuz La Chiesaz (FR); ROSTØL, Frank Vidar, 4640 Søgne (NO)
(74) Representative: Rees, David Christopher
(86) International application number: PCT/NO2007/000306
(87) International publication number: WO 2008/033027

(56) References cited:
- WO-A1-90/11977
- WO-A1-97/49644
- FR-A1- 2 749 843
- GB-A- 2 429 204
- US-A- 4 935 060
- US-A1- 2003 150 615
- US-A1- 2005 166 802
- US-B1- 6 832 652

## Description

### Field of Invention

The present invention is concerned with the cementation of steel pipes or other structures in oil and gas well such as casings and liners.

### Background

In the cementation of oil wells, a cement slurry is usually pumped down into a casing and placed into the annular space between the outside of the casing and wall of the well. The two most important purposes of the cementation process are to prevent the transport of gas and liquid between subterranean formations and to tie up and support the casing pipe. In addition to sealing oil, gas and water producing formations, the cement also protects the casing against corrosion, and prevents gas- or oil-blow-outs as the cement slurry seals the well very quickly and impermeably.

At temperatures above 110°C, the hydration phases of set Portland cement undergo changes. This phenomenon is known as strength-retrogression (SR). This results in poorer isolation properties such as lower compressive-strength and higher set-cement permeability, and leads to a loss of zonal isolation as described in the oilfield cementing industry with possibility of liquid or gas influx from the formation into the well and across the different formations.

Strength-retrogression is easily identified through a quick and early compressive-strength decrease and set-cement permeability increase over time at temperature above 110 deg C. When no decrease of compressive strength and no increase in set-cement permeability can be observed, it is then concluded that no strength-retrogression is taking place.

For 50 years, companies have routinely added 35% by weight of cement (BWOC) of silica flour, with an average particle diameter of about 20-60 microns, to the cement to prevent SR from occurring (Journal of American concrete institute V27, No. 6, 678, February 1956).

However, there are handling and storage difficulties associated with the use of dry-blends prepared with cement and dry silica flour, such as lack of spaces on the rigs or offshore platforms to accommodate several different dry-blends, contamination misuse, and the general difficulties associated with the preparation and handling of fine powders.

More recently, liquid suspension of silica have been commercialised as an alternative to completely dry-blending operations. These liquid additives have proven effective in preventing SR when used at an equivalent 35% BWOC total silica. They have shown some advantages over dry-blending operations, especially in offshore or remote operations when only the deepest casings/liners require the use of silica to stabilise the Portland cement or other.

Unfortunately, a limitation that was identified early in its use was the relatively high concentration of liquid product that was required to equate to the 35% BWOC total silica. This meant that a large volume of liquid additives had to be transported and mixed during the cementing operation. This is particularly significant in the case of offshore drilling rigs, where deck and storage space can be extremely limited.

There is thus storage problems both with different dry materials and with liquid additives.

### Description of Invention

It is therefore an object of the present invention to provide a means for reducing SR in the cement used for oil and gas pipelines, in particular, for offshore wells.

It is a further object to avoid the need to store and mix dry powders to form cement slurries, and also to minimise the volume of any cement slurry additives brought to the rig.

Often, in the case of offshore wells, the well temperatures lie in the range 100°C to 150°C. It has been observed by the present inventors that at these well temperatures, a different approach to the use of silica as a cement slurry additive can be adopted.

According to the invention, therefore, there is provided a method of cementing a casing of an oil or gas pipeline to a surrounding well wall, which comprises forming an hydraulic cement slurry, deploying the slurry in the annulus between the pipeline casing and the surrounding well wall, and allowing the cement to set; in which the cement slurry is formed by mixing together an hydraulic cement, 12 to 24% of silica based on the weight of cement, and water; the silica comprising of 1/3 to 2/3 microfine silica and 2/3 to 1/3 silica flour.

According to a preferred embodiment of the invention the silica is in the form of an aqueous suspension of microfine silica and silica flour.

The preferred microfine silica particles used in this invention are of amorphous nature such as microsilica, but could also be crystalline.

It has been found by the inventors that by adopting a combination of microfine silica particles and silica flour, preferably in the form of an aqueous suspension, in a cement slurry for use in wells with temperatures in the range 110°C to 150°C, the amount of silica can be significantly reduced, while still preventing SR from occuring in the cement.

Particularly with the use of silica in the form of a liquid suspension, the use of dry silica flour is avoided, mixing dry ingredients is avoided, a single component (namely the aqueous silica suspension) only need be transported and stored, and the volume that needs to be transported and stored is minimised in circumstances where storage availability is at a premium.

Preferably, the total silica represents 15 to 20% by weight of cement.

At levels of silica of 10% BWOC and less, the suppression of SR is not effective, particularly at higher temperatures, while at temperatures above 150°C it becomes necessary to use silica levels above 25% of BWOC.

The term "microsilica" used in the specification and claims of this application is particulate, amorphous SiO₂ obtained from a process in which silica (quartz) is reduced to SiO-gas and the reduction product is oxidised in vapour phase to form amorphous silica. Microsilica may contain at least 70% by weight silica (SiO₂) and has a specific density of 2.1-2.3 g/cm³ and a surface area of 15-40 m²/g. The primary particles are substantially spherical and have an average size of about 0.15 µm. Microsilica is preferably obtained as a coproduct in the production of silicon or silicon alloys in electric reduction furnaces. In these processes large quantities of microsilica are formed. The microsilica is recovered in conventional manner using baghouse filters or other collection apparatus.

The term "microfine crystalline silica" used in the specification and claims of this application is particulate crystalline silica having a D50 of maximum 10 µm and preferably a D50 of about 3 µm.

Silica flour is simply ground crystalline silica with a mean particle size of about 25 µm.

### Detailed description of Invention

The invention will now be illustrated in more detail in the following non-limiting Examples.

### Example 1 (Prior art)

A standard cement slurry without silica was mixed, cast and cured at 150 deg C.

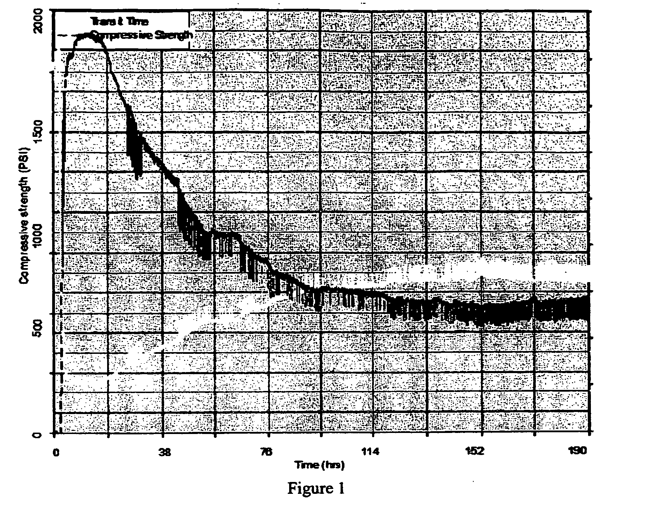

Compressive strength was measured and set-cement permeability were measured. The results are shown in Table 1 and in Figure 1. As can be seen SR is rapidly occurring after 9 hrs as shown in Figure 1.

**Table 1**

| Set-cement permeability measurements of cement without silica cured at 150 deg C. | | | |
|---|---|---|---|
| Sample # | Composition | Temperature during cement set | Permeability |
| | Cement without silica | 150 deg C | High, typically of th order of 10 mD |

### Example 2 (Prior Art)

Cement with 35% BWOC dry silica flour was mixed, cast and tested for compressive strength and permeability at 150 deg. C. The results are shown in Table 2. As expected no SR occurred with addition of 35 % BWOC.

**Table 2**

| Cubes (48hr) At 150 deg C | C.S. (psi) | UCA Strength psi @ 48 Hr |
|---|---|---|
| 35% Silica Flour | 8503 | 3633 |
| 35% Silica Flour | 8946 | |

### Set-cement permeability measurements

| Sample # | Composition | Temperature during cement set | Air Permeability |
|---|---|---|---|
| 5 | 35%BWOC silica flour | 175 deg C | 0,000838 mD |
| From literature | 35%BWOC silica flour | 150 deg C | 0,004 mD |

### Example 3 (Prior Art)

Cement + 35% silica BWOC originating from a liquid suspension of 1/3 microsilica and 2/3 silica flour was mixed, cast and tested at 150 deg C.

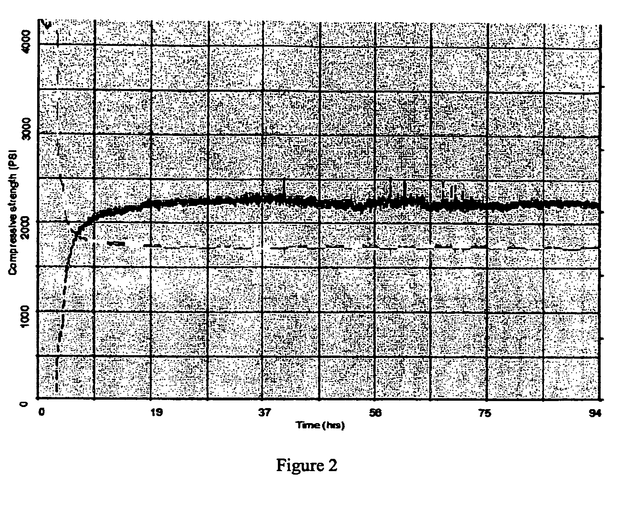

The results are shown in Table 3 and in Figure 2.

**Table 3**

| Cubes (48hr) At 150 deg C | C.S. (psi) | UCA Strength psi @ 48 Hr |
|---|---|---|
| 35% BWOC MBHT | 8078 | 4069 |
| 35% BWOC MBHT | 9197 | |

From Figure 2 it can be seen that CS increases to a value of more than 2000 psi and stays at this level. No strength retrogression can be observed. This was_expected as the cement had conventional silica content of 35 BWOC.

### Example 4 (Invention)

A cement containing 17 % BWOC total silica from the liquid suspension of silica containing 1/3 microsilica and 2/3 silica flour was mixed cast, cured and tested at 150 deg C. The air permeability and compressive strength was measured at intervals for a time period of one year. The results are shown in Table 4.

**Table 4**

| Curing time at 150 deg C | 3 weeks | 3 months | 6 months | 1 year |
|---|---|---|---|---|
| Klinkenberg air permeability mD | 0,092 | 0,00082 | 0,00028 | 0,00036 |
| Compressive Strength PSI | - | 4630 | 6230 | - |

| | | | | |
|---|---|---|---|---|
| NOTE Air permeability is of several orders higher than water permeability.ref. Paper: "Klinkenberg effect for gas permeability and its comparison to water permeability for porous sedimentary rocks" - W. Tanikawa and T. Shimamoto. | | | | |

No sign of SR has occurred after 1 year at 150 deg C. Set-cement permeability remains low and CS remains high. Examination of the samples after one year showed a very low porosity and very fine pores making the cement very well suited for sealing well bores having a bottom temperature of up to 150 deg. C.

It was surprising that SR could be prevented by the use of about half of the amount of silica compared to conventional practice.

### Example 5 (Invention)

A cement containing 17% BWOC total silica originating from a liquid suspension of silica prepared with 2/3^{rd} microsilica and 1/3^{rd} silica flour was mixed, cast and tested at 150 deg. C.

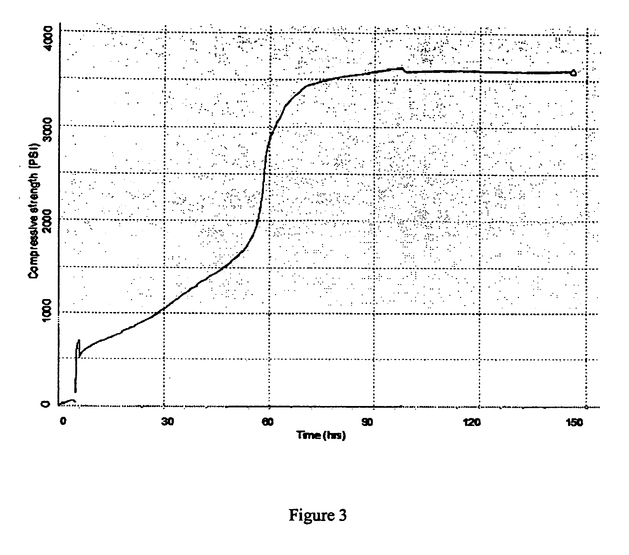

As shown in Figure 3 no sign of SR appears after 15 days curing at 150 deg C showing that a liquid blend with this ratio of microsilica to silica flour is effectively preventing SR.

### Example 6 (Invention)

A cement containing 17%BWOC originating from liquid suspension of silica prepared with 1/3 microfine crystalline silica with a D50 of 3 µm and 2/3 silica flour was mixed, cast and tested at 150 deg. C .

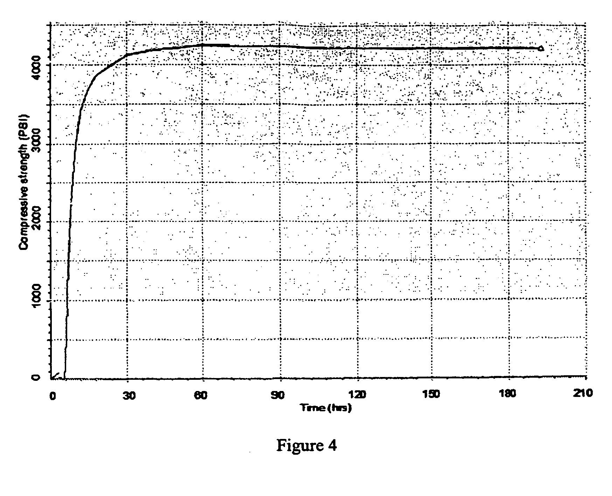

As can be seen from Figure 4 no sign of SR occurs after 1 week curing at 150 deg C. The microfine silica particle in the liquid silica blend can be of amorphous or crystalline origins.

### Example 7 (Comparison)

A cement containing 10% total silica BWOC originating from the liquid suspension of silica conatining 1/3 microsilica and 2/3 silica flour was mixed, cast and tested at 150 deg C.

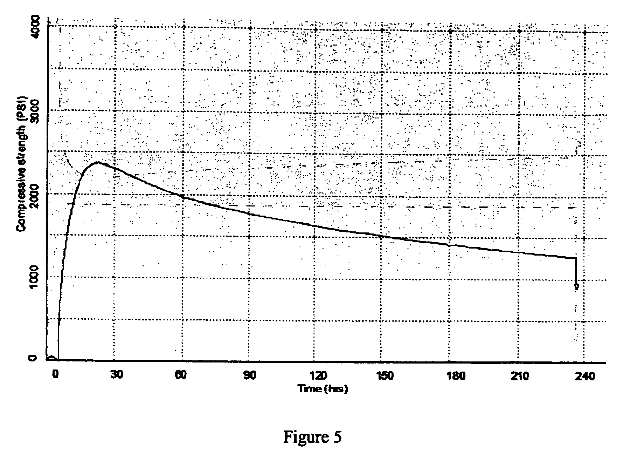

As can be seen from Figure 5, clear signs of SR occurs after 24 hrs at 150 deg. C when only 10% BWOC total silica from the liquid suspension of silica is used. A minimum silica content is needed to effectively prevent SR.

## Claims

1. A method of cementing a casing of an oil or gas pipeline to a surrounding well wall, said well having a bottom temperature of between 100 and 150°C, which method comprises forming an hydraulic cement slurry, deploying the slurry in the annulus between the pipeline casing and the surrounding well wall, and allowing the cement to set; in which the cement slurry is formed by mixing together an hydraulic cement, 12 to 24% of silica based on the weight of cement, and water; wherein the silica comprises 1/3 to 2/3 microfine silica and 2/3 to 1/3 silica flour.

2. A method as claimed in claim 1, in which the silica is in the form of an aqueous suspension of microfine silica and silica flour.

3. A method as claimed in claim 1, in which the microfine silica is microsilica, microfine crystalline silica, colloidal silica or mixtures thereof.

4. A method as claimed in claim 3, in which the microfine crystalline silica has a D50 of maximum 10 µm.

5. A method as claimed in Claim 1, in which the silica represents 15 to 20% by weight of cement.

6. An hydraulic cement slurry for use in the cementation of gas or oil wells having a bottom temperature of between 100 and 150°C, comprising: an hydraulic cement, 12 to 24% of silica based on the weight of cement and water wherein the silica comprises 1/3 to 2/3 microfine silica and 2/3 to 1/3 silica flour.

7. An hydraulic cement slurry as claimed in claim 6, in which the silica comprises an aqueous suspension of microfine silica and silica flour.

8. An hydraulic cement slurry as claimed in claim 6, in which the microfine silica is microsilica, microfine crystalline silica, colloidal silica or mixtures thereof.

9. An hydraulic cement slurry as claimed in claim 8, in which the microfine crystalline silica has a D50 of maximum 10 µm.

## Patentansprüche

1. Verfahren zur Zementierung eines Mantels einer Öl- oder Gaspipeline zu einer umgebenden Bohrlochwand, wobei das Bohrloch eine Bodentemperatur zwischen 100 und 150°C hat, wobei das Verfahren Bilden eines unter Wasser härtenden Zementschlamms, Ausbringen des Schlamms in den Ringraum zwischen dem Pipelinemantel und der umgebenden Bohrlochwand und Erlauben, dass der Zement härtet, umfasst; wobei der Zementschlamm gebildet wird durch gemeinsames Vermischen eines unter Wasser härtenden Zements, 12 bis 24% Kieselgel, bezogen auf das Gewicht des Zements, und Wasser; wobei das Kieselgel 1/3 bis 2/3 mikrofeines Kieselgel und 2/3 bis 1/3 Kieselgelmehl umfasst.

2. Verfahren nach Anspruch 1, wobei das Kieselgel in der Form einer wässrigen Suspension von mikrofeinem Kieselgel und Kieselgelmehl vorliegt.

3. Verfahren nach Anspruch 1, wobei das mikrofeine Kieselgel Mikrokieselgel, mikrofeines kristallines Kieselgel, kolloidales Kieselgel oder Gemische hiervon ist.

4. Verfahren nach Anspruch 3, wobei das mikrofeine kristalline Kieselgel ein D50 von maximal 10 µm hat.

5. Verfahren nach Anspruch 1, wobei das Kieselgel 15 bis 20 Gew.-% des Zements ausmacht.

6. Unter Wasser härtender Zementschlamm zur Verwendung in der Zementierung von Gas- oder Ölbohrlöchern, die eine Bodentemperatur zwischen 100 und 150°C haben, umfassend: einen unter Wasser härtenden Zement, 12 bis 24% Kieselgel, bezogen auf das Gewicht des Zements, und Wasser, wobei das Kieselgel 1/3 bis 2/3 mikrofeines Kieselgel und 2/3 bis 1/3 Kieselgelmehl umfasst.

7. Unter Wasser härtender Zementschlamm nach Anspruch 6, wobei das Kieselgel eine wässrige Suspension von mikrofeinem Kieselgel und Kieselgelmehl umfasst.

8. Unter Wasser härtender Zementschlamm nach Anspruch 6, wobei das mikrofeine Kieselgel Mikrokieselgel, mikrofeines kristallines Kieselgel, kolloidales Kieselgel oder Gemische hiervon ist.

9. Unter Wasser härtender Zementschlamm nach Anspruch 8, wobei das mikrofeine kristalline Kieselgel ein D50 von maximal 10 µm hat.

## Revendications

1. Procédé de cimentation d'un tubage de pipeline de transport d'huile ou de gaz sur une paroi d'un puits qui l'entoure, le fond de ce puits ayant une température comprise entre 100 et 150°C, ce procédé comprenant les étapes consistant à former une pâte de ciment hydraulique, déployer cette pâte dans le volume annulaire compris entre le tubage du pipeline et la paroi du puits qui l'entoure, et lasser le ciment faire prise, selon lequel
la pâte de ciment est formée en mélangeant un ciment hydraulique, 12 à 24 % de silice par rapport au poids de ciment et de l'eau ; la silice comprenant 1/3 à 2/3 de silice microfine et 2/3 à 1/3 de farine de silice.

2. Procédé conforme à la revendication 1,
selon lequel
la silice est sous la forme d'une suspension aqueuse de silice microfine et de farine de silice.

3. Procédé conforme à la revendication 1,
selon lequel
la silice microfine, est de la microsilice, de la silice cristalline microfine, de la silice colloïdale ou des mélanges de telles silices.

4. Procédé conforme à la revendication 3,
selon lequel
la silice cristalline microfine a un D50 d'au maximum 10 µm.

5. Procédé conforme à la revendication 1,
selon lequel
la silice représente 15 à 20 % en poids du ciment.

6. Pâte de ciment hydraulique destinée à être utilisée pour la cimentation de puits de gaz ou de pétrole dont la température du fond est comprise entre 100 et 150°C, comprenant un ciment hydraulique, 12 à 24 % de silice par rapport au poids de ciment et de l'eau, la silice renfermant 1/3 à 2/3 de silice microfine et 2/3 à 1/3 de farine de silice.

7. Pâte de ciment hydraulique conforme à la revendication 6, dans laquelle
la silice renferme une suspension aqueuse de silice microfine et de farine de silice.

8. Pâte de ciment hydraulique conforme à la revendication 6, dans laquelle
la silice microfine est de la microsilice, de la silice cristalline microfine, de la silice colloïdale ou des mélanges de telles silices.

9. Pâte de ciment hydraulique conforme à la revendication 8, dans laquelle
la silice cristalline microfine présente un D50 d'au maximum 10 µm.
